# EUROPEAN PATENT SPECIFICATION

(11) **EP 2 202 103 B1**
(45) Date of publication and mention of the grant of the patent: **10.04.2013**
(21) Application number: 08172726.5
(22) Date of filing: 23.12.2008
(51) Int. Cl.: B60G 3/26, B60G 7/00

(54) **Road vehicle suspension and corresponding road vehicle**
Straßenfahrzeugaufhängung und entsprechendes Straßenfahrzeug
Suspension de véhicule routier et véhicule routier correspondant

(43) Date of publication of application: 30.06.2010
(73) Proprietor: Iveco France S.A., 69200 Vénissieux (FR)
(72) Inventor: Leorat, Pascal, 07690 Villevocance (FR)
(74) Representative: Borsano, Corrado

(56) References cited:
- EP-A- 0 306 625
- US-A- 3 446 513
- US-A- 5 346 241
- US-A- 5 810 383
- US-A1- 2005 073 126
- US-A1- 2005 258 608
- US-A1- 2008 303 234

## Description

The present invention relates to a suspension for a road vehicle and to a road vehicle comprising at least one such suspension.

The road vehicles at which the invention is aimed are, in particular, transport vehicles, namely those capable of carrying passengers. It may also be applied to vehicles of the heavy goods vehicle type or, alternatively, may be applied to motor cars. The invention is aimed more specifically, although not exclusively, at a suspension for a steered driven axle.

Steered-axle suspensions are known. An example of a steered-axle suspension is disclosed in the Patent Application US 2005/0073126 A1. Know steered-axle suspensions comprise a steering knuckle secured to the hub of a corresponding wheel, and two wishbones positioned respectively towards the top and bottom of this steering knuckle and which provide the connection between the latter and the chassis. There is also at least one suspension element, generally a buffer, combined as appropriate with a shock absorber and/or a stabilizer.

The two wishbones are usually articulated to the steering knuckle using two ball joint connections. The vertical component, where present, of the forces applied to these ball joints must not have any tendency to separate the constituent elements of the ball joint. As a result, in most cases, one and the same ball joint takes all the suspension loads while the other ball joint by contrast is not subjected to any load.

This known solution has certain disadvantages. Thus, it will be appreciated that the ball joint that takes all the load has to be very large in size. In general, this entails developing it specifically for the purpose, which of course appreciably increases its cost.

It will be noted that, as an alternative, it may be conceivable to provide separate suspension elements for each of the two ball joints. Although this would admittedly solve the problem of the sizing of the ball joints, because the loads would then be spread across them evenly, it would, however, entail using twice as many suspension elements, which would then present a problem of space.

This being the case, the invention sets out to remedy these various disadvantages.

To this end, the subject of the invention is a suspension for a road vehicle, particularly for a bus, coach or heavy goods vehicle, comprising a steering knuckle that can be secured to a hub supporting a wheel of the said vehicle, and two ball joints, these being an upper ball joint and a lower ball joint, borne by the steering knuckle, these two ball joints providing the connection between the body shell of the vehicle and the steering knuckle, this suspension further comprising at least one suspension element, particularly a suspension buffer, characterized in that this suspension further comprises spreader means capable of generating a first induced force on the lower ball joint and a second induced force on the upper ball joint when the suspension element exerts a single force on these spreader means, the value of each induced force being markedly lower than that of the single force.

According to the invention:
- the spreader means comprise a lever, a first end of which is secured to the suspension element and the other end of which is intended to be articulated to the body shell of the road vehicle, this lever extending some distance from an adjacent, lower or upper, ball joint;
- the lever comprises a crossbar one end of which is articulated to the said adjacent, lower or upper, ball joint, and the other end of which supports a transfer link extending towards the other, upper or lower, ball joint;
- the other, upper or lower, ball joint is connected to the body shell of the vehicle via an upper wishbone of the suspension and said transfer link is articulated to said upper wishbone.

According to other features of the invention:
- the transfer link is articulated close to the other, upper or lower, ball joint, but some distance from this ball joint;
- there is an additional link articulated, on the one hand, to the body shell and, on the other hand, at an end region of the lever that is the opposite end to the suspension element, this additional link and this end region defining a lower wishbone of this suspension;
- the two wishbones, these being the upper and lower wishbones, extend roughly longitudinally with reference to the main axis of the vehicle;
- the upper wishbone diverges towards a first end of the vehicle, front or rear, while the lower wishbone diverges towards the other end of the vehicle, rear or front;
- the upper and lower wishbones extend towards one and the same end of the vehicle.

Another subject of the invention is a road vehicle comprising a suspension as defined hereinabove.

The invention will be described hereinafter with reference to the attached drawings which are given solely by way of nonlimiting example, and in which:
- Figure 1 is a perspective view illustrating a suspension for a road vehicle according to the invention;
- Figure 2 is a plan view schematically illustrating the suspension of Figure 1; and
- Figure 3 is a schematic view illustrating the spreading of forces that the suspension of Figure 1 permits.

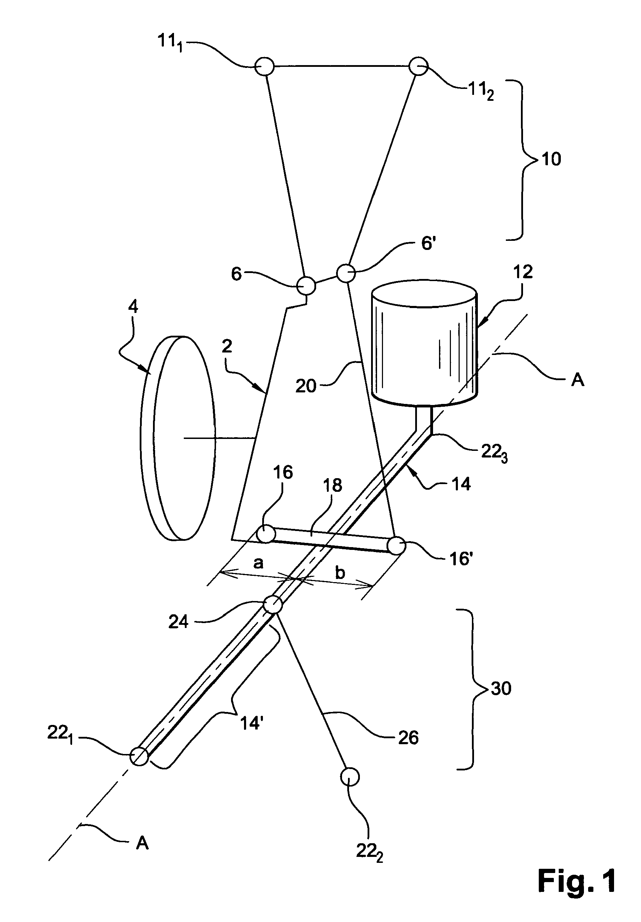

The road vehicle suspension illustrated in particular in Figure 1 first of all and in the conventional way comprises a steering knuckle 2 secured by any appropriate means to a hub 4 supporting a wheel, which has not been shown. The upper end of the steering knuckle 2 accepts an upper ball joint 6, of a type known per se, which supports an upper wishbone 10 articulated to the body shell of the vehicle by elastic links 11₁, 11₂.

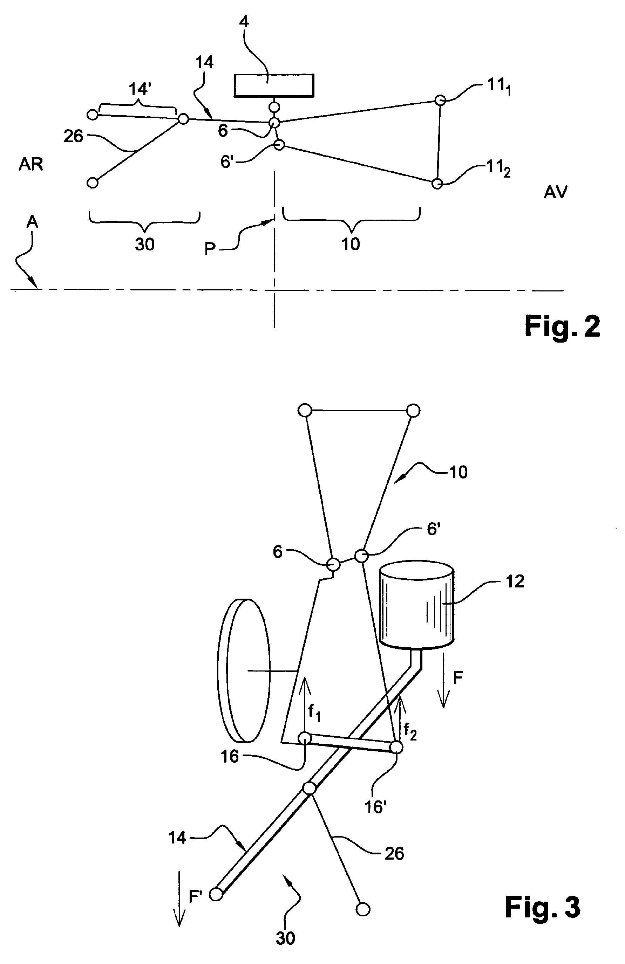

As shown by Figure 2 in particular, this upper wishbone 10 extends substantially from the rear towards the front of the vehicle, namely along the longitudinal axis A of the vehicle. Compare this with the prior art in which a wishbone such as this would run at right angles to this longitudinal axis.

The lower end of the steering knuckle 2 accepts a lower ball joint 16, of a type known per se. This ball joint is connected to a lower arm 14 which is articulated to the body shell of the vehicle via an elastic ball joint 22₁.

More specifically, this arm 14 has a crossbar 18, one end of which supports the aforementioned ball joint 16. In addition, the other end of this crossbar 18 supports a complementary ball joint 16' which collaborates with a link 20. The latter is articulated to the upper wishbone 10 at an articulation point 6' distant from the ball joint 6, so that this link 20 connects this upper wishbone 10 and the lower arm 14.

As shown in Figure 2 in particular, the arm 14 runs substantially from the rear towards the front of the vehicle, namely along the longitudinal axis A thereof. The suspension according to the invention further comprises a suspension element, which is a buffer 12, of a type known per se. This buffer rests against the arm 14 at a point, referenced 22₃. The distances separating each ball joint 16, 16' from the axis A passing through the points 22₁ and 22₃ along the axis of the crossbar 18 are denoted a and b respectively.

The arm 14 is further connected to an additional link 26, by means of an intermediate ball joint 24, this link 26 itself being connected to the body shell of the vehicle by means of an additional ball joint 22₂. Thus, the end region 14' of the arm 14, which region lies between the two ball joints 22₁ and 24, forms a first branch of a lower wishbone 30, the second branch of which consists of the link 26. As shown by Figure 2, this lower wishbone 30 runs longitudinally, just like the upper wishbone 10.

These two wishbones 10 and 30 extend in the opposite directions from one another with respect to a transverse plane P of the vehicle. In this particular instance, the upper wishbone 10 extends towards the front AV of the vehicle from the ball joint 6 while the lower wishbone 30 extends towards the rear AR from the ball joint 24. However, it must be noted that, by way of alternative, these two wishbones 10 and 30 may extend in the same direction, namely they both extend forwards, or alternatively may both extend backwards.

The way in which the suspension according to the invention and described hereinabove works will now be described hereinafter.

As the road vehicle travels along, the buffer 12 exerts a vertical and downwardly directed force F on the arm 14. This tends first of all to generate an additional force F', likewise directed downwards, at the articulation between the arm 14 and the body shell.

In addition, there are two forces f1 and f2 which, by contrast, are directed upwards, and the points of application of which are located respectively at the ball joints 16 and 16'. It will be noted that the modulus of these two forces is directly dependent on the ratio between the distances a and b. In particular, by a careful choice of these dimensions, it is possible to give these two forces f1 and f2 moduli that are very similar to one another.

In addition, the force f2 applied at the ball joint 16' is passed on, via the link 20, to the upper wishbone 10. The arm 14 therefore acts like a lever, namely in that it allows the force F applied by the buffer to be split into two far weaker forces f1 and f2 applied to the various ball joints.

The invention is able to achieve the aforementioned objectives.

It will be recalled first of all that, in the prior art that called upon a single buffer like that of Figure 1, all of the force applied by the buffer was applied to the lower ball joint while the upper ball joint received no loading. As has been seen above, it is therefore necessary for this lower ball joint to be engineered very robustly.

By contrast, according to the invention, the load applied by the buffer is spread, by virtue of the presence of the arm 14, between the two ball joints 6 and 16 positioned at the upper and lower ends of the steering knuckle 2. This being the case, there is no need for these two ball joints to be particularly large in size, which means that they can be of a standard size and therefore of a reasonable cost price.

## Claims

1. Suspension for a road vehicle, particularly for a bus, coach or heavy goods vehicle, comprising a steering knuckle (2) that can be secured to a hub (4) supporting a wheel of the said vehicle, and two ball joints, these being an upper ball joint (6) and a lower ball joint (16), borne by the steering knuckle (2), these two ball joints providing the connection between the body shell of the vehicle and the steering knuckle, this suspension further comprising at least one suspension element, particularly a suspension buffer (12), said suspension further comprising spreader means (14, 18) capable of generating a first induced force (f1) on the lower ball joint (16) and a second induced force (f2) on the upper ball joint (6) when the suspension element (12) exerts a single force (F) on these spreader means, the value of each induced force being lower than that of the single force, wherein:
- said spreader means comprise a lever (14), a first end of which is secured to the suspension element (12) and the other end of which is articulated to the body shell of the road vehicle, this lever extending some distance from an adjacent, lower (16) or upper, ball joint;
- said lever (14) comprising a crossbar (18) one end of which is articulated to the said adjacent, lower (16) or upper, ball joint, and the other end of which supports a transfer link (20) extending towards the other, upper (6) or lower, ball joint; **characterized in that**
the other, upper (6) or lower, ball joint is connected to the body shell of the vehicle via a wishbone (10) of the suspension, said transfer link (20) being articulated to said wishbone (10).

2. Suspension according to claim 1, wherein said transfer link (20) is articulated close to the other, upper (6) or lower, ball joint, but some distance from this ball joint.

3. Suspension according to Claim 1 or 2, wherein there is an additional link (26) articulated, on the one hand, to the body shell and, on the other hand, at an end region (14') of the lever (14) that is the opposite end to the suspension element (12), this additional link and this end region defining a lower wishbone (30) of this suspension.

4. Suspension according to claim 3, wherein said two wishbones, these being the upper (10) and lower (30) wishbones, extend roughly longitudinally with reference to the main axis (A) of the vehicle.

5. Suspension according to claim 4, wherein said upper wishbone (10) diverges towards a first end of the vehicle, front (AV) or rear, while the lower wishbone (30) diverges towards the other end of the vehicle, rear (AR) or front.

6. Suspension according to Claim 4, wherein said upper and lower wishbones extend towards one and the same end of the vehicle.

7. Road vehicle, particularly a bus, coach or heavy goods vehicle, comprising a suspension according to any one of the preceding claims.

## Patentansprüche

1. Aufhängung für ein Straßenfahrzeug, insbesondere einen Bus, Reisebus oder Lastkraftwagen, aufweisend einen Achsschenkel (2), der an einer Radnabe (4) befestigt werden kann, die ein Rad des Fahrzeuges hält, und zwei Kugelgelenke, welche ein oberes Kugelgelenk (6) und ein unteres Kugelgelenk (16) sind, die von dem Achsschenkel (2) getragen werden, wobei die beiden Kugelgelenke die Verbindung zwischen der Karosserie des Fahrzeugs und dem Achsschenkel bereitstellen, und wobei die Aufhängung weiter zumindest ein Federungselement, insbesondere einen Aufhängungspuffer (12) aufweist, und die Aufhängung weiter Spreizmittel (14, 18) umfasst, die geeignet sind, eine erste induzierte Kraft (f1) an dem unteren Kugelgelenk (16) und eine zweite induzierte Kraft (f2) am oberen Kugelgelenk (6) zu erzeugen, wenn das Federungselement (12) eine Einzelkraft (F) auf diese Spreizmittel ausübt, wobei der Wert jeder induzierten Kraft geringer ist als der der Einzelkraft, wobei:
- die Spreizmittel einen Hebel (14) aufweisen, dessen erstes Ende am Dämpferelement (12) befestigt ist und dessen anderes Ende an die Karosserie des Straßenfahrzeugs angelenkt ist, und der Hebel sich über einigen Abstand von einem benachbarten unteren (16) oder oberen Kugelgelenk erstreckt;
- der Hebel (14) eine Querstange (18) aufweist, dessen eines Ende an dem benachbarten unteren (16) oder oberen Kugelgelenk angelenkt ist, und dessen anderes Ende eine Übertragungsverbindung (20) stützt, die sich zum anderen oberen (6) oder unteren Kugelgelenk erstreckt, **dadurch gekennzeichnet, dass**
das andere obere oder untere Kugelgelenk mit der Karosserie des Fahrzeugs über einen Dreiecklenker (10) der Aufhängung verbunden ist, und die Übertragungsverbindung (20) an dem Dreiecklenker (10) angelenkt ist.

2. Aufhängung nach Anspruch 1, bei der die Übertragungsverbindung (20) nahe dem anderen oberen (6) oder unteren Kugelgelenk angelenkt ist, jedoch in einigem Abstand von diesem Kugelgelenk.

3. Aufhängung nach Anspruch 1 oder 2, die eine zusätzliche Verbindung (26) zeigt, die auf einer Seite an die Karosserie und auf der anderen Seite an einen Endbereich (14') des Hebels (14), welcher das gegenüberliegende Ende des Federungselements (12) ist, angelenkt ist, wobei die zusätzliche Verbindung und der Endbereich einen unteren Dreiecklenker (30) der Aufhängung definieren.

4. Aufhängung nach Anspruch 3, bei der die beiden Dreiecklenker, der obere (10) und der untere (30) Dreiecklenker sich im Wesentlichen in Bezug auf die Hauptachse (A) des Fahrzeugs erstrecken.

5. Aufhängung nach Anspruch 4, bei der der obere Dreiecklenker (10) in Richtung eines ersten Endes des Fahrzeuges, Front (AV) oder Heck, divergiert, während der untere Dreiecklenker (30) in Richtung des anderen Endes des Fahrzeuges, Heck oder Front (AV), divergiert.

6. Aufhängung nach Anspruch 4, bei der sich der obere und der untere Dreiecklenker in Richtung eines und des gleichen Endes des Fahrzeuges erstrecken.

7. Straßenfahrzeug, insbesondere ein Bus, Reisebus oder Lastkraftwagen, aufweisend eine Aufhängung nach einem der vorigen Ansprüche.

## Revendications

1. Suspension pour un véhicule routier, particulièrement pour un bus, un autocar ou un véhicule de poids lourds, comprenant une fusée d'essieu (2) qui peut être fixée à un moyeu (4) supportant une roue dudit véhicule, et deux joints à rotule, ceux-ci étant un joint à rotule supérieur (6) et un joint à rotule inférieur (16), supportés par la fusée d'essieu (2), ces deux joints à rotule établissant une connexion entre la carrosserie du véhicule et la fusée d'essieu, cette suspension comprenant en outre au moins un élément de suspension, particulièrement un tampon de suspension (12), ladite suspension comprenant en outre un moyen d'expansion (14, 18) apte à produire une première force induite (f1) sur le joint à rotule inférieur (16) et une deuxième force induite (f2) sur le joint à rotule supérieur (6) lorsque l'élément de suspension (12) exerce une force unique (F) sur ces moyens d'expansion, la valeur de chaque force induite étant plus basse que celle de la force unique, où
- ledit moyen d'expansion comprend un levier (14), dont une première extrémité est fixé à l'élément de suspension (12) et dont l'autre extrémité est articulée à la carrosserie du véhicule routier, ce levier s'étendant à une distance d'un joint à rotule inférieur (16) ou supérieur, adjacent ;
- ledit levier (14) comprenant une barre transversale (18) dont une extrémité est articulée audit joint à rotule inférieur (16) ou supérieur, adjacent, et dont l'autre extrémité supporte une bielle de transfert (20) s'étendant vers l'autre joint à rotule supérieur (6) ou inférieur ;
**caractérisée en ce que** l'autre joint à rotule supérieur (6) ou inférieur est connecté à la carrosserie du véhicule par un triangle (10) de la suspension, ladite bielle de transfert (20) étant articulée audit triangle (10).

2. Suspension selon la revendication 1, dans laquelle ladite bielle de transfert (20) est articulée à proximité de l'autre joint à rotule supérieur (6) ou inférieur, mais à une certaine distance de ce joint à rotule.

3. Suspension selon la revendication 1 ou 2, dans laquelle il y a une bielle additionnelle (26) articulée, d'une part, à la carrosserie et, d'autre part, à une région d'extrémité (14') du levier (14) qui est l'extrémité opposée à l'élément de suspension (12), cette bielle additionnelle et cette région d'extrémité définissant un triangle inférieur (30) de cette suspension.

4. Suspension selon la revendication 3, dans laquelle lesdits deux triangles, qui sont les triangles supérieur (10) et inférieur (30), s'étendent sensiblement longitudinalement relativement à l'axe principal (A) du véhicule.

5. Suspension selon la revendication 4, dans laquelle ledit triangle supérieur (10) diverge vers une première extrémité du véhicule, avant (AV) ou arrière, tandis que le triangle inférieur (30) diverge vers l'autre extrémité du véhicule, arrière (AR) ou avant.

6. Suspension selon la revendication 4, dans laquelle lesdits triangles supérieur et inférieur s'étendent vers une même extrémité du véhicule.

7. Véhicule routier, en particulier un bus, un autocar ou un véhicule de poids lourds, comprenant une suspension selon l'une quelconque des revendications précédentes.
